# EUROPÄISCHE PATENTSCHRIFT

(11) **EP 1 634 472 B1**
(45) Veröffentlichungstag und Bekanntmachung des Hinweises auf die Patenterteilung: **22.05.2013**
(21) Anmeldenummer: 04739494.5
(22) Anmeldetag: 01.06.2004
(51) Int. Cl.: G06K 19/07

(54) **CHIPKARTE MIT WENIGSTENS EINER APPLIKATION**
CHIP CARD HAVING AT LEAST ONE APPLICATION
CARTE A PUCE COMPORTANT AU MOINS UNE APPLICATION

(30) Priorität: 03.06.2003 DE 10324996
(43) Veröffentlichungstag der Anmeldung: 15.03.2006
(73) Patentinhaber: Giesecke & Devrient GmbH, 81677 München (DE)
(72) Erfinder: DIETZE, Claus, 82395 Obersoechering (DE)
(74) Vertreter: Klunker . Schmitt-Nilson . Hirsch
(86) Internationale Anmeldenummer: PCT/EP2004/005902
(87) Internationale Veröffentlichungsnummer: WO 2004/107249

(56) Entgegenhaltungen:
- WO-A-00/69183
- WO-A-01/67240
- ECKEL, GEORGE: "Inside Windows NT Workstation" 1996, NEW RIDERS PUBLISHING , INDIANAPOLIS, INDIANA, USA , XP002311374 Zitat umfasst Seite 249 - 254 Seite 252, Zeile 24 - Zeile 26
- "Digital cellular telecommunications system (Phase 2+); Support of Localised Service Area (SoLSA); Stage 2 (3GPP TS 43.073 version 5.0.0 Release 5); ETSI TS 143 073" ETSI STANDARDS, EUROPEAN TELECOMMUNICATIONS STANDARDS INSTITUTE, SOPHIA-ANTIPO, FR, Bd. 3-CN4, Nr. V500, Juni 2002 (2002-06), XP014010514 ISSN: 0000-0001

## Beschreibung

Die Erfindung betrifft eine Chipkarte mit wenigstens einer Applikation. Wei- . terhin betrifft die Erfindung ein Verfahren zum Ausführen einer auf einer Chipkarte verfügbaren Applikation.

Chipkarten können sehr vielfältig eingesetzt werden, beispielsweise zur Abwicklung von Transaktionen des Zahlungsverkehrs, als Ausweisdokumente bei Zugangskontrollen, als Berechtigungsnachweis zur Nutzung eines Mobilfunksystems usw. Hierzu sind auf den Chipkarten Applikationen in Form von Hardware oder Software implementiert, die jeweils die gewünschte Funktionalität zur Verfügung stellen. Angesichts der Vielzahl der Einsatzmöglichkeiten und der damit verbundenen Vielzahl von Funktionalitäten wird zunehmend dazu übergegangen, auf derselben Chipkarte mehrere Applikationen zu implementieren. Für jede Implementierung einer Applikation ist in einem Speicher der Chipkarte ein Eintrag vorgesehen, der auf die Implementierung verweist, so dass jede Implementierung durch einen ihr zugeordneten Eintrag im Speicher der Chipkarte zugänglich ist und die zugehörige Applikation über diesen Eintrag aufgerufen werden kann. Diese Vorgehensweise hat sich sehr gut bewährt, setzt allerdings voraus, dass auf der Chipkarte eine ausreichende Kapazität verfügbar ist, um mehrere Applikationen zu implementieren. Die Chipkarte ist somit im Hinblick auf ihre Speichergröße bzw. ihre sonstige Hardware-Ausstattung verglichen mit einer Chipkarte mit nur einer implementierten Applikation deutlich größer zu dimensionieren, was wiederum erhöhte Herstellungskosten der Chipkarte zur Folge hat.

Der Erfindung liegt die Aufgabe zugrunde, eine Chipkarte mittels eines möglichst geringen Aufwands mit einer erweiterten Funktionalität auszustatten.

Diese Aufgabe wird durch eine Chipkarte mit der Merkmalskombination des Anspruchs 1 gelöst.

Die erfindungsgemäße Chipkarte weist wenigstens eine Applikation auf, für die auf der Chipkarte eine Implementierung und ein auf die Implementierung verweisender Eintrag vorhanden sind. Die Erfindung zeichnet sich dabei dadurch aus, dass auf der Chipkarte mehrere Einträge vorhanden sind, die auf dieselbe Implementierung verweisen. Mit anderen Worten, die bekannte 1:1 Zuordnung zwischen den Einträgen im Speicher der Chipkarte und den auf der Chipkarte vorhandenen Implementierungen wird aufgehoben. Stattdessen sind für dieselbe Implementierung mehrere Einträge vorhanden. Dies hat den Vorteil, dass dieselbe Implementierung mehrfach nutzbar ist und dadurch Speicherplatz oder zusätzliche Hardware für weitere Implementierungen eingespart werden kann. Durch diese erfindungsgemäße Mehrfachnutzung derselben Implementierung kann das Vorhandensein einer der Anzahl der Einträge entsprechenden Zahl von Applikationen mit einer 1:1 Zuordnung zwischen den Einträgen und den Applikationen simuliert werden. Dies bedeutet, dass die Einträge, die auf dieselbe Implementierung verweisen, unterschiedliche virtuelle Applikationen kennzeichnen können. Obwohl für alle diese Einträge insgesamt nur eine einzige Implementierung vorhanden ist und somit auf der Chipkarte nur für diese eine Implementierung Ressourcen verfügbar sein müssen, verhält sich die Chipkarte nach außen hin so, als ob für jeden Eintrag eine eigene Applikation implementiert wäre. Somit erlaubt die Erfindung eine sehr effiziente Nutzung der Ressourcen der Chipkarte.

Die Einträge enthalten in der Regel gemäß einem Standard fest vorgegebene Angaben, die beispielsweise den Herausgeber der zugeordneten Applikation bzw. die Applikation selbst näher bezeichnen können. Von Bedeutung für die Erfindung ist dabei, dass die Einträge zudem jeweils eine frei wählbare Informationssequenz enthalten können. Die frei wählbaren Informationssequenzen derjenigen Einträge, die auf dieselbe Implementierung verweisen, können jeweils einen unterschiedlichen Inhalt aufweisen. Auf diese Weise können ähnliche Applikationen mit einem sehr geringen Aufwand durch eine einzige Implementierung repräsentiert werden, wobei die Unterschiede zwischen den einzelnen Applikationen jeweils bei den freiwählbaren Informationssequenzen der Einträge berücksichtigt werden können. Insbesondere können die frei wählbaren Informationssequenzen Vorgaben für die Ausführung der zugehörigen Implementierungen aufweisen.

In einem bevorzugten Ausführungsbeispiel ist die erfindungsgemäße Chipkarte für den Einsatz in einem Mobilteil eines Mobilfunksystems vorgesehen. Um mehrere Netzzugangsberechtigungen auf der Chipkarte vorzuhalten, kann eine einzige Implementierung für mehrere virtuelle Applikationen zum Nachweis einer Netzzugangsberechtigung vorhanden sein. Insbesondere kann für jede virtuelle Applikation zum Nachweis einer Netzzugangsberechtigung jeweils ein Eintrag vorhanden sein, wobei die Einträge auf dieselbe Implementierung verweisen und über jeden Eintrag eine andere Netzzugangsberechtigung verfügbar ist. Die Einträge können unterschiedliche Parameter aufweisen, die beim Aufrufen der virtuellen Applikationen zum Nachweis einer Netzzugangsberechtigung ausgewertet werden und die Verwendung der zur jeweiligen Netzzugangsberechtigung gehörigen Daten bewirken. Dadurch kann trotz Ausführung derselben Implementierung die Verwendung unterschiedlicher Daten entsprechend der jeweils gewünschten Netzzugangsberechtigung sichergestellt werden.

Die Erfindung betrifft weiterhin ein Verfahren zum Ausführen einer auf einer Chipkarte verfügbaren Applikation. Das erfindungsgemäße Verfahren zeichnet sich dadurch aus, dass einer von mehreren auf der Chipkarte vorhandenen Einträgen ausgewertet wird, die gemeinsam auf eine Implementierung der Applikation auf der Chipkarte verweisen, und diese Implementierung in einer durch den ausgewerteten Eintrag vorgegebenen Weise ausgeführt wird. Insbesondere wird die auf der Chipkarte vorhandene Implementierung abhängig davon, welcher der auf die Implementierung verweisenden Einträge ausgewertet wird, auf unterschiedliche Weise ausgeführt.

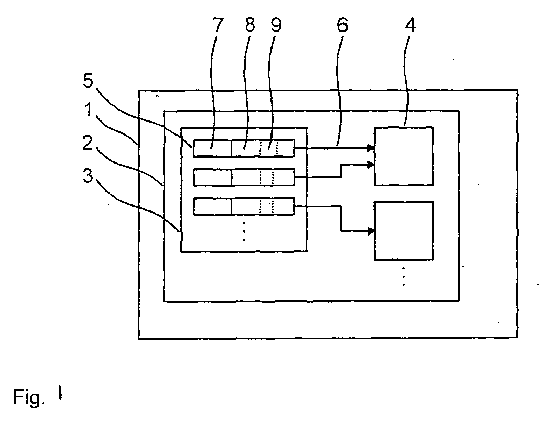

Die Erfindung wird im folgenden anhand des in der Zeichnung dargestellten Ausführungsbeispiels näher erläutert, das sich auf eine Chipkarte bezieht, die für ein Mobilteil eines Mobilfunksystems vorgesehen ist. Die Erfindung ist jedoch nicht auf dieses spezielle Einsatzgebiet beschränkt, sondern bezieht sich in gleicher Weise auch auf anderweitig eingesetzte Chipkarten.

Die einzige Fig. zeigt eine schematische Darstellung eines Ausführungsbeispiels für eine erfindungsgemäß ausgebildete Chipkarte 1. Dabei sind lediglich einige wenige Funktionsblöcke dargestellt, die für die Erfindung von Bedeutung sind. Die sonstigen Funktionalitäten der Chipkarte 1 sind in der Fig. nicht dargestellt und werden im folgenden auch nicht näher beschrieben.

Die Chipkarte 1 weist einen Speicher 2 auf, in dem eine Datei 3 abgelegt ist. Weiterhin sind im Speicher 2 mehrere Implementierungen 4 von Applikationen jeweils in Form einer entsprechenden Software abgelegt. Alternativ zur Ausbildung der Implementierungen 4 als Software können die Implementierungen 4 auch in Form von Hardware auf der Chipkarte 1 realisiert sein. Die Datei 3 enthält mehrere Applikationsbezeichner 5, die jeweils auf eine der Implementierungen 4 verweisen. Dies ist durch Pfeile 6 dargestellt, die sich von den Applikationsbezeichnern 5 zu den Implementierungen 4 erstrecken.

Die Applikationsbezeichner 5 bestehen jeweils aus einem Bezeichnungsteil 7 und einem Erweiterungsteil 8. Während der Bezeichnungsteil 7 gemäß einem Standard komplett und fest vorgegeben ist, enthält der Erweiterungsteil 8 einen optionalen Teil 9, dessen Inhalt frei wählbar ist.

Die Applikationsbezeichner 5 dienen dazu, die Implementierungen 4 von außen zugänglich zu machen, um beispielsweise einem Endgerät zu ermöglichen, eine der auf der Chipkarte 1 implementierten Applikation zu starten, d. h. der Zugang zu den auf der Chipkarte 1 implementierten Applikationen verläuft jeweils über die Applikationsbezeichner 5. Im vorliegenden Ausführungsbeispiel handelt es sich bei dem Endgerät um das Mobilteil, in das die Chipkarte 1 eingesteckt ist. Vom Mobilteil kann beispielsweise eine Applikation gestartet werden, mit der von der Chipkarte 1 ein Nachweis für eine Netzzugangsberechtigung erbracht wird. Ein derartiger Nachweis kann vor oder während eines Telefongesprächs verlangt werden und dient dazu, nur berechtigten Personen Zugang zum Mobilfunknetz zu gewähren und die Voraussetzungen für eine funktionsfähige Gebührenabrechnung zu schaffen. Der Nachweis wird mittels einer Authentisierung erbracht, für die mit Hilfe der Applikation eine geheime Information bereitgestellt wird.

Von wesentlicher Bedeutung für die Erfindung ist es, dass mehrere unterschiedliche Applikationsbezeichner 5 auf dieselbe Implementierung 4 verweisen. Dies äußert sich in der Fig. dadurch, dass mehrere Pfeile 6, die von unterschiedlichen Applikationsbezeichnern 5 ausgehen, bei derselben Implementierung 4 enden. Auf dieselbe Implementierung 4, die auf der Chipkarte 1 ein einziges Mal vorhanden ist, kann somit über unterschiedliche Applikationsbezeichner 5 zugegriffen werden. Folglich tritt dieselbe Implementierung 4 auf der logischen Ebene mehrfach in Erscheinung, d.h. einer tatsächlichen Implementierung 4 sind mehrere Applikationen zugeordnet, wobei für jede Applikation ein eigener Applikationsbezeichner 5 vorhanden ist. Da die einzelnen Applikationen nicht jeweils über eine eigene Implementierung 4 verfügen, sondern gemeinsam derselben Implementierung 4 zugeordnet sind und lediglich auf der logischen Ebene als separate Einheiten existieren, werden sie im folgenden auch als virtuelle Applikationen bezeichnet. Auf die vorstehend beschriebene Weise ist es möglich, für ähnliche Applikationen, die sich beispielsweise lediglich in den verwendeten Daten unterscheiden, nur eine einzige Implementierung 4 vorzusehen und die Chipkarte 1 nach außen hin trotzdem so zu verwenden, als wären alle Applikationen tatsächlich einzeln implementiert.

Die Unterschiede zwischen den Applikationen können jeweils bei den Applikationsbezeichner 5 berücksichtigt werden. Die Funktionsweise der Applikationsbezeichner 5 erschöpft sich nicht darin, auf eine der Implementierungen 4 zu verweisen und dadurch die für die Ausführung der Applikation benötigte Implementierung 4 zugänglich zu machen. Darüber hinaus beeinflussen die Applikationsbezeichner 5 die Art und Weise der Ausführung der Implementierungen 4. Dies bedeutet, dass dieselbe Implementierung 4 auf unterschiedliche Weise ausgeführt wird und somit auch unterschiedliche Ergebnisse generieren kann, abhängig davon, über welchen Applikationsbezeichner 5 die Ausführung gestartet wird. Der Einfluss der Applikationsbezeichner 5 auf die Ausführung der Implementierungen 4 resultiert daraus, dass die Applikationsbezeichner 5 jeweils im optionalen Teil 9 des Erweiterungsteils 8 einen oder mehrere Parameter aufweisen, die die Ausführung der Implementierung 4 beeinflussen. Da unterschiedliche Applikationsbezeichner 5, die auf dieselbe Implementierung 4 verweisen in der Regele unterschiedliche Parameter aufweisen, wird sich die Art und Weise der Ausführung der Implementierung 4 für diese Applikationsbezeichner 5 ebenfalls unterscheiden. Bei den Parametern kann es sich beispielsweise um Angaben zu Speicherbereichen handeln, auf die während der Ausführung der Implementierung 4 zugegriffen wird. Bei dem vorliegenden Ausführungsbeispiel, bei dem die Chipkarte 1 in ein Mobilteil eines Mobilfunksystems eingesteckt ist, können in diesen Speicherbereichen beispielsweise Berechtigungsinformationen abgelegt sein, die für den Nachweis einer Netzzugangsberechtigung benötigt werden. Dabei sind in unterschiedlichen Speicherbereichen unterschiedliche Berechtigungsinformationen abgelegt. Die unterschiedlichen Speicherbereiche können über unterschiedliche Parameter in den Applikationsbezeichnern 5 adressiert werden. Dies bedeutet, dass abhängig davon, über welchen Applikationsbezeichner 5 die Ausführung der Implementierung 4 gestartet wird, unterschiedliche Berechtigungsinformationen für den Nachweis einer Netzzugangsberechtigung verwendet werden. Nach außen hin verhält sich die Chipkarte 1 so, als ob mehrere Applikationen zum Nachweis einer Netzzugangsberechtigung implementiert wären, wobei jede Applikation über ihre eigenen Berechtigungsinformationen verfügt. Die Applikation zum Nachweis einer Netzzugangsberechtigung ist aber nicht tatsächlich mehrfach implementiert sondern lediglich virtuell mehrfach vorhanden, d. h. für jede Berechtigungsinformation ist eine virtuelle Applikation zum Nachweis einer Netzzugangsberechtigung vorhanden.

## Patentansprüche

1. Chipkarte, vorgesehen für den Einsatz in einem Mobilteil eines Mobilfunksystems, mit wenigstens einer eine Funktionalität zur Verfügung stellenden Applikation zum Nachweis einer Netzzugangsberechtigung, für die auf der Chipkarte (1) eine Implementierung (4) und ein auf die Implementierung (4) verweisender Eintrag (5) vorhanden ist, **dadurch gekennzeichnet, dass** auf der Chipkarte (1) mehrere Einträge (5) vorhanden sind, die auf dieselbe Implementierung (4) verweisen, so dass der Implementierung (4) mehrere Applikationen zum Nachweis einer Netzzugangsberechtigung derart zugeordnet sind, wobei für jede Applikation ein eigener Eintrag (5) vorhanden ist, dass die Implementierung (4) auf unterschiedliche Weise ausführbar ist, abhängig davon, über welchen Eintrag (5) diese gestartet wird, wobei die Einträge (5) jeweils eine frei wählbare Informationssequenz (9) enthalten und die frei wählbaren Informationssequenzen (9) derjenigen Einträge (5), die auf dieselbe Implementierung (4) verweisen, jeweils einen unterschiedlichen Inhalt und Vorgaben für die Ausführung der zugehörigen Implementierung (4) aufweisen.

2. Chipkarte nach Anspruch 1, **dadurch gekennzeichnet, dass** die Einträge (5), die auf dieselbe Implementierung (4) verweisen, unterschiedliche virtuelle Applikationen kennzeichnen.

3. Chipkarte nach Anspruch 2, **dadurch gekennzeichnet, dass** für jede virtuelle Applikation zum Nachweis einer Netzzugangsberechtigung jeweils ein Eintrag (5) vorhanden ist, wobei die Einträge (5) auf dieselbe Implementierung (4) verweisen und über jeden Eintrag (5) eine andere Netzzugangsberechtigung verfügbar ist.

4. Chipkarte nach Anspruch 3, **dadurch gekennzeichnet, dass** die Einträge (5) unterschiedliche Parameter aufweisen, die beim Aufrufen der virtuellen Applikationen zum Nachweis einer Netzzugangsberechtigung ausgewertet werden und die Verwendung der zur jeweiligen Netzzugangsberechtigung gehörigen Daten bewirken.

5. Verfahren zum Ausführen einer auf einer für den Einsatz in einem Mobilteil eines Mobilfunksystems vorgesehenen Chipkarte (1) nach Anspruch 1 verfügbaren, eine Funktionalität zur Verfügung stellenden Applikation zum Nachweis einer Netzzugangsberechtigung, **dadurch gekennzeichnet, dass** auf der Chipkarte (1) mehrere Einträge (5) vorhanden sind, die auf dieselbe Implementierung (4) der Applikation verweisen, wobei der Implementierung (4) mehrere Applikationen zum Nachweis einer Netzzugangsberechtigung derart zugeordnet werden, wobei für jede Applikation ein eigener Eintrag (5) vorhanden ist, dass die Implementierung (4) auf unterschiedliche Weise ausgeführt wird, abhängig davon, über welchen Eintrag (5) diese gestartet wird, wobei die Einträge (5) jeweils eine frei wählbare Informationssequenz (9) enthalten und die frei wählbaren Informationssequenzen (9) derjenigen Einträge (5), die auf dieselbe Implementierung (4) verweisen, jeweils einen unterschiedlichen Inhalt und Vorgaben für die Ausführung der zugehörigen Implementierung (4) aufweisen.

## Claims

1. A chip card provided for use in a handset of a mobile communications system, with at least one application making available a functionality for proving a network access authorization, for which there is present on the chip card (1) an implementation (4) and an entry (5) referring to the implementation (4), **characterized in that** several entries (5) are present on the chip card (1), said entries referring to the same implementation (4), so that several applications for proving a network access authorization are associated with the implementation (4) in such a fashion, whereas a separate entry (5) is present for each application, that the implementation (4) is executable in different fashions, in dependence on the entry (5) through which said implementation is started, wherein the entries (5) each contain a freely selectable information sequence (9) and the freely selectable information sequences (9) of those entries (5) which refer to the same implementation (4) each have a different content and specifications for the execution of the associated implementation (4).

2. The chip card according to claim 1, **characterized in that** the entries (5) referring to the same implementation (4) characterize different virtual applications.

3. The chip card according to claim 2, **characterized in that** an entry (5) is present for each virtual application for proving a network access authorization, the entries (5) referring to the same implementation (4) and a different network access authorization being available through each entry (5).

4. The chip card according to claim 3, **characterized in that** the entries (5) have different parameters that are evaluated upon calling the virtual applications for proving a network access authorization and effect the use of the data belonging to the particular network access authorization.

5. A method for executing an application making available a functionality for proving a network access authorization, the application being provided on a chip card (1) according to claim 1, the chip card (1) being provided for use in a handset of a mobile communications system, **characterized in that** several entries (5) are present on the chip card (1), said entries referring to the same implementation (4) of the application, wherein several applications for proving a network access authorization are associated with the implementation (4) in such a fashion, wherein a separate entry (5) being present for each application, that the implementation (4) is executed in a different fashion, in dependence on the entry (5) through which said implementation is started, wherein the entries (5) respectively contain a freely selectable information sequence (9) and the freely selectable information sequences (9) of those entries (5) which refer to the same implementation (4) each have a different content and specifications for executing the associated implementation (4).

## Revendications

1. Carte à puce, prévue pour l'utilisation dans une partie mobile d'un système de radiocommunication mobile, comprenant au moins une application mettant une fonctionnalité à disposition et destinée à la justification d'une autorisation d'accès au réseau, pour laquelle se trouvent sur la carte à puce (1) une implémentation (4) et une entrée (5) renvoyant à l'implémentation (4), **caractérisée en ce que** plusieurs entrées (5) renvoyant à la même implémentation (4) se trouvent sur la carte à puce (1), de telle sorte que plusieurs applications destinées à la justification d'une autorisation d'accès au réseau sont affectées de telle manière à l'implémentation (4), il y ayant une propre entrée (5) pour chaque application, que l'implémentation (4) est exécutable de différente façon, selon l'entrée (5) par l'intermédiaire de laquelle ladite implémentation est démarrée, les entrées (5) incluant respectivement une séquence d'information (9) librement sélectionnable et les séquences d'information (9) librement sélectionnables des entrées (5) qui renvoient à la même l'implémentation (4) comportant respectivement un contenu différent et des spécifications pour l'exécution de l'implémentation (4) correspondante.

2. Carte à puce selon la revendication 1, **caractérisée en ce que** les entrées (5) qui renvoient à la même implémentation (4) déterminent différentes applications virtuelles.

3. Carte à puce selon la revendication 2, **caractérisée en ce que**, pour chaque application virtuelle destinée à la justification d'une autorisation d'accès au réseau, il y a respectivement une entrée (5), les entrées (5) renvoyant à la même l'implémentation (4) et une autre autorisation d'accès au réseau étant disponible par l'intermédiaire de chaque entrée (5).

4. Carte à puce selon la revendication 3, **caractérisée en ce que** les entrées (5) présentent différents paramètres qui sont évalués lors de l'appel des applications virtuelles pour la justification d'une autorisation d'accès au réseau et provoquent l'utilisation des données correspondant à l'autorisation respective d'accès au réseau.

5. Procédé d'exécution d'une application destinée à la justification d'une autorisation d'accès au réseau, ladite application étant disponible sur une carte à puce (1) selon la revendication 1 prévue pour l'utilisation dans une partie mobile d'un système de radiocommunication mobile et mettant une fonctionnalité à disposition, **caractérisé en ce que** plusieurs entrées (5) renvoyant à la même implémentation (4) de l'application se trouvent sur la carte à puce (1), plusieurs applications destinées à la justification d'une autorisation d'accès au réseau étant affectées de telle manière à l'implémentation (4), il y ayant une propre entrée (5) pour chaque application, que l'implémentation (4) est exécutée de différente façon, selon l'entrée (5) par l'intermédiaire de laquelle ladite implémentation est démarrée, les entrées (5) incluant respectivement une séquence d'information (9) librement sélectionnable et les séquences d'information (9) librement sélectionnables des entrées (5) qui renvoient à la même l'implémentation (4) présentant respectivement un contenu différent et des spécifications pour l'exécution de l'implémentation (4) correspondante.
